# EUROPEAN PATENT APPLICATION

(11) **EP 4 686 611 A1**
(43) Date of publication of application: **04.02.2026**
(21) Application number: 24191791.3
(22) Date of filing: 30.07.2024
(51) Int. Cl.: B60R 3/02

(54) **STEP ARRANGEMENT**

(71) Applicant: Modul-System HH AB, 431 22 Mölndal (SE)
(72) Inventor: CARLSSON, Anders, SE-422 50 HISINGS BACKA (SE)
(74) Representative: AWA Sweden AB

(57) **Abstract**

The disclosure relates to a step arrangement (1) for a road vehicle (40), the step arrangement (1) comprising: a foot plate (30) at least one bracket (20) configured to be mounted to the road vehicle (40) at least one support arm (10) having a longitudinal axis extending between a first end (16a) fixedly connected to the at least one bracket (20) and a second end (16b) connected to the foot plate (30); wherein the at least one support arm (10) comprises a primary deformation zone (DZ) in an area between the first end (16a) and the second end (16b) such that the at least one support arm (10) is configured to controllably deform in a deformation plane coinciding with the longitudinal axis in response to a collision force (F) acting on the foot plate.

## Description

### Field of Invention

The present invention relates to a step arrangement for road vehicles and road vehicles comprising such a step arrangement.

### Technical Background

It is a common occurrence that vehicles are damaged during parking, either by the driver hitting an obstacle or being hit by another vehicle. This most commonly occurs when driving in reverse, since the field of vision is reduced.

For service vehicles, such as VAN:s or SUV:s, a rear step, or side step can be attached to the vehicle. Such steps may improve upon the accessibility to cargo or luggage compartments. However, these steps are especially at risk of being damaged during parking, since they are placed at most distal parts of a vehicle and therefore often extend beyond the chassis. A situation of particular risk is when reversing the vehicle onto a loading dock. Replacing or repairing rear steps or side steps can be costly. Furthermore, since the step is often fixedly attached to the vehicle in a stiff manner, a large enough force may still be translated to and damage the vehicle chassis. Hence, there is room for improvement and a need to further develop such steps for road vehicles.

### Summary

It is an object of the invention to provide a step arrangement for a road vehicle addressing at least some of the design criteria that the step arrangement should be cost effective, functional and have less complexity than common step arrangements. To achieve at least one of the these objects and further objects that will be evident from the following description, step arrangement having the features defined in claim 1 is provided according to the present invention.

According to a first aspect of the present invention, a step arrangement for a for a road vehicle, the step arrangement comprising: a foot plate; at least one bracket configured to be mounted to the road vehicle; at least one support arm having a longitudinal axis extending between a first end fixedly connected to the at least one bracket and a second end connected to the foot plate; wherein the at least one support arm comprises a primary deformation zone in an area between the first end and the second end such that the at least one support arm is configured to controllably deform in a deformation plane coinciding with the longitudinal axis in response to a collision force acting on the foot plate.

A deformation zone is within the context of the present application to be understood as a portion or part of a body or arrangement purposively designed for deformation upon absorption of energy, for example above a desired threshold value. A primary deformation zone is therefore within the context of the present disclosure to be understood as the deformation zone which, upon absorption of a collision force by the foot plate of such a magnitude that the at least one support arm deforms, is first to deform and/or which deforms to the largest extent as compared to other deformation zones.

By providing the support arm with a primary deformation zone, the step arrangement is thus purposively designed such that energy imparted by collisions are stored therein instead of being transferred to the vehicle and/or damaging the foot plate.

It is to be understood that a collision force is related to a velocity of the vehicle and/or any object which collides with the vehicle. Thus, any force or other abstract object related to a force, such as a force threshold, referenced within this application may equally be construed in terms of impact velocity.

The footplate may have an extension in a major plane, for example parallel to the longitudinal axis of the at least one support arm. Alternatively, the footplate may be tilted with regards to the longitudinal axis. The foot plate may be made of any suitable material i.e. metals, polymeric materials, wood based materials or any combination thereof. The foot plate may be constructed so that liquid can easily be removed or even go through the foot plate i.e. having a structure where there are one or more holes in the foot plate. Further the foot plate may be configured to have a non-slip area on the major surface thereof to minimize fall risk when used by an operator. The bracket may be mounted to a road vehicle by any means, for instance, bolts, welds, rivets, glue or by a mechanical locking mechanism.

The step arrangement may be mounted to a vehicle in a variety of orientations. Preferably, the step arrangement is mounted on the vehicle such that the longitudinal axis of the at least one support arm is arranged substantially parallel to the ground. The step arrangement may be mounted to the vehicle such that there is a distance between the vehicle and the footstep.

It may be noted that by being at the first end fixedly connected to the bracket, the at least one support arm may be fixedly connected to the vehicle such that the first end does not move freely, neither when driving the road vehicle, when stepping on the foot plate nor in case of a collision. Further even if the step arrangement is fixedly connected to the road vehicle, the at least one support arm may absorb a collision force by controllably deform at a primary deformation zone, leaving the road vehicle unharmed.

The at least one support arm may be provided in a suitable material i.e. metal material, such as steel, polymeric materials, high performance materials or a combination thereof. The at least one support arm may comprise different materials throughout the arm.

The primary deformation zone may extend from the first end to the second end or may be extending in an intermediate portion between the first end and the second end of the at least one support arm.

A primary mode of deformation of the at least one support arm may be elastic deformation. Hereby, the deformation is to a large extent reversible. By being elastically deformed, the support arm may at least partially return to the same shape as before the collision. An advantage of elastic deformation is that the step arrangement may be used after a collision occurred with maintained function and thus there may be no need to repair or replace the step arrangement.

The primary deformation zone may comprise a weakening, such as a bend or a kink. Weakening in this context is to be understood as a portion of a material where the material strength is weaker than the surrounding material. For example, such a portion may have less bending stiffness than other portions, or be thinner than other portions. The weakening in the deformation zone may give rise to a rotational axis during deformation of the at least one support arm, thereby controlling the deformation of the at least one support arm. Further the a collision force may be more easily transferred to the deformation zone when the weakening is present. The primary deformation zone may be provided with more than one bend or kink.

The at least one support arm may be provided with a continuous bend, such that a whole at least one support arm is part of an arc or part of another smooth shape or bend. The bend may be a discontinuous bend such as being a bend between two angled sections of the at least one support arm. The bend may have an extension in the deformation plane such that deformation is favored to occur in the deformation plane in response to a collision force. The at least one support arm may bend in a transverse direction of the longitudinal axis of the at least one support arm. For example the at least one support arm bends in a direction of the extension of the deformation plane. The kink may be provided as a groove. Said groove may have an extension orthogonal the longitudinal axis.

The at least one support arm may comprise a first section comprising said first end and a second section comprising said second end, wherein the first section may be connected to the second section by an intermediate section comprising the deformation zone, wherein the first section and the second section may be configured to pivot in relation to each around said deformation zone during deformation.

That is, the first and second sections are configured to move in the plane of deformation in relation to each other. An advantage of having the first section arranged configured to pivot in relation to each other around the deformation zone during deformation is that the movement of the first section and the second section may, during deformation, transfer collision forces to the primary deformation zone.

The first section and the second section may be arranged at angle in relation to each other in the deformation plane. An advantage of having the first section arranged at an angle in relation to the second section is that deformation of the at least one support arm is guided towards the angle, thus it is easier for the two section to pivot in relation to each other around the deformation zone during deformation.

The intermediate section may comprise more than one deformation zones i.e. the intermediate section may comprise two or more deformation zones.

The at least one support arm may have a cross section providing a bending resistance in the deformation plane which is lower than a bending resistance normal to the deformation plane. By having a lower bending resistance in the deformation plane than the bending resistance normal to the deformation plane may further transfer a collision force to the deformation zone and thus favor deformation in the preferred direction e.g. in the deformation plane, while inhibit deformation in other directions. Hereby, the at least one support arm is The cross section may have a rectangular form having a height larger than a width, the edges of the cross section may be sharp or smooth. The cross section may be oval. The cross section may have a polygonal shape. The at least one support arm may be provided as a leaf spring. A leaf spring inherently bend around an axis to absorb energy when hit by a force.

A ratio between a height and width of the at least one support arm may be at least 10:1, preferably 12:1, more preferred at least 16:1, and most preferred at least 20:1. The ratio being 10:1 refers to the height being ten times as big as the width. The ratio 12:1 refers to the height being twelve times as big as the width. The ratio 16:1 refers to the height being sixteen times as big as the width. The ratio 20:1 refers to the height being twenty times as big as the width.

Hereby, the at least one support arm has a higher bending stiffness in the height direction than in the width direction. The different bending stiffnesses may further guide and transfer a collision force towards the primary deformation zone. The ratio may promote deformation in the deformation plane while inhibit deformation in a normal direction to the deformation plane in case of collision. With an increase height to width ratio the collision force may impact the at least one support arm to mainly deform in the width direction i.e. in the deformation plane.

The height and width may be orthogonal the longitudinal axis. The height may be normal to the deformation plane. The width may be parallel the deformation plane. The width and height may be a width and height seen from a cross section of the at least one support arm

The second end of the at least one support arm may be rotatably connected to the foot plate. By the second end of the at least one support arm being rotatably connected to the foot plate, the support arm may have at least some degree of freedom to move, such as being tilted, rotated or a combination thereof. During a collision when the at least one support arm deforms it is advantageous for the foot plate to be rotatably connected since a larger part of the energy may be transferred to the at least one support arm. An advantage of the rotatably connection is that the at least one support arm may absorb a larger part of the collision energy thus the support plate is less prone to be damaged.

The second end of the at least one support arm may be rotatably connected to the foot plate via a hinge member having a rotational axis having an extension transverse to the longitudinal axis of the at least one support arm.

An advantage of the hinge member being transverse to the longitudinal axis of the at least one support arm is that the foot plate, which the hinge member may be connected to, may move freely in a plane perpendicular to the hinge member. Therefore if a collision occurs, the foot plate may, instead of being deformed, rotates around the hinge and transfer a collision force to the at least one support arm. In most collisions a collision force will act at least in the direction of the longitudinal axis of the at least one support arm. Therefore by the hinge member having a rotational axis having an extension transvers said longitudinal axis may be an efficient way of transferring a collision force to the deformation zone via the foot plate.

The bracket may be configured to be fixedly mounted to a lower side of a chassis of the road vehicle. It may be noted that there is usually suitable spots to mount a foot plate to a lower side of a chassis of a road vehicle since there are usually rigid structural parts of the chassis accessible at the lower side of the chassis. Further it may be noted that other parts of the chassis usually is constructed to have different functions such as making a vehicle more aerodynamic or more accessible.

Two support arms may be arranged substantially in parallel such that the respective deformation planes of the two support arms are substantially parallel, and wherein the foot plate may extend between the respective second end portions of the two support arms.

Within the context of the present application, that two support arms are arranged substantially in parallel is to be understood that the support arms having at least one geometric component being parallel. That is, the respective longitudinal axes of the two support arms are substantially parallel, such that there is a large overlap of a projection of one of the longitudinal axes onto the other longitudinal axis.

The deformation plane being parallel may also include the respective deformation planes being coinciding such as the two support arms may share a common deformation plane.

The two support arms may be provided in mirrored form such that they can be arrange mirrored each other if the support arm is not symmetric. The two support arms may be provided in as copies of each other. The support arms may be formed from the same kind of material or material group.

An advantage of having two support arms is that the foot plate might be more stable by having two connecting points. The foot plate may have less tendencies to move around since two connecting points may limit movement in a plane. The support arms may share a collision force between them such that deformation in each support arm may be less in each support arm than if there would be only one support arm provided. If the connection between the support arms and the foot plate is rotational, movement around the connection between the support arm and foot plate may be hindered until a collision force acts upon the foot plate by the foot plate having two connecting points.

The two support arms may each be configured to deform in the respective deformation plane such that the respective deformation zones are moved towards each other. The support arms may deform towards each other such that the deformation of the deformation zone in one support arm is in an opposite direction to the deformation of the deformation zone in the other support arm.

The at least one support arm may further comprise a secondary deformation zone adjacent the bracket. Since the at least one support arm is fixedly connected to the bracket, a rotational center may arise in the at least one support arm adjacent the bracket when a collision force is acting upon the foot plate. The at least one support arm may be configured to have a secondary deformation zone to address said rotational center, thus minimize the risk of an uncontrolled collapse or break in the at least one support arm.

The at least one bracket may be further configured to be releasably connected to the road vehicle by a fastening means, the fastening means being configured to disconnected from the road vehicle when the foot plate is acted upon by a collision force above a predetermined threshold value.

Hereby, the fastening means may improve upon the resilience of the step arrangement in the deformation plane unless the foot plate is acted upon by a collision force above a predetermined threshold value. In other words, the stiffness of the step arrangement will be improved in the deformation plane, i.e. preferably in a horizontal plane substantially parallel with the ground, for collision forces below the predetermined threshold value. For example, the fastening means may be configured to disconnect from the road vehicle when the foot plate is acted upon by a collision force corresponding to an impact velocity of 5 km/h, or 10 km/h. Consequently, the step arrangement may be stiffer for low impact velocities than for high impact velocities.

The bracket may have a first and a second mounting surface configured for fixedly mounting the bracket to the chassis of the road vehicle, wherein the first and second mounting surface each having a respective plane of extension, wherein the planes of extension are arranged at an angle in relation to each other. The first and second mounting surfaces are arranged such that any rotational center of the bracket may be hindered, i.e. the bracket may not have a rotational center to rotate around which is not at least hindered by at least one of the two mounting surfaces. The angle which the mounting surfaces are arranged in may lock the bracket in place in three dimensions. The mounting surfaces may be connected to each other. The respective planes of extension may be arranged substantially perpendicular to each other.

According to a second aspect of the present invention, a road vehicle comprising a step arrangement according to the first aspect is provided.

Any technical effect or benefit discussed in relation to the first aspect of the present invention may be applicable to the second aspect.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

The invention may also in short be said to relate to a step arrangement for a road vehicle, the step arrangement comprising: a foot plate at least one bracket configured to be mounted to the road vehicle at least one support arm having a longitudinal axis extending between a first end fixedly connected to the at least one bracket and a second end connected to the foot plate wherein the at least one support arm comprises a primary deformation zone in an area between the first end and the second end such that the at least one support arm is configured to controllably deform in a deformation plane coinciding with the longitudinal axis in response to a collision force acting on the foot plate

### Brief description of the drawings

The invention will by way of example be described in more detail with reference to the appended schematic drawings, which shows a presently preferred embodiment of the invention.
Fig. 1a is a perspective view of a step arrangement according to the present invention.
Fig. 1b is a perspective view from an underside of the step arrangement of Fig. 1a.
Fig. 2a is a top view of a step arrangement according to the present invention.
Fig. 2b is a top view of the step arrangement in Fig 2a with a collision force acting on the foot plate.
Fig. 2c is a top view of the step arrangement in Fig 2a with a collision force acting at an angle on the foot plate.
Fig. 3 is a perspective view of a step arrangement mounted on a road vehicle according to the present invention.

### Detailed description

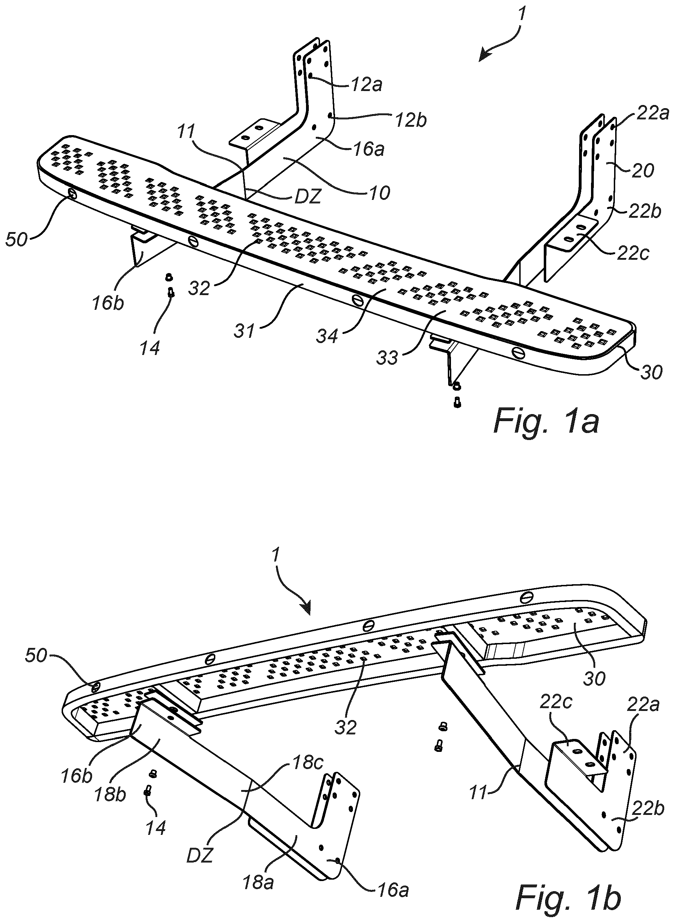

Fig. 1a and Fig 1b shows a step arrangement 1 according to the invention. The step arrangement 1 comprising at least one support arm 10, a foot plate 30 and at least on bracket 20 configured to be mounted to the road vehicle. Here, the step arrangement comprises two support arms 10.

Each support arm 10 has a longitudinal axis extending between a first end 16a and a second end 16b. The first end 16a is configured to be fixedly connected to the bracket 20. The support arms 10 and the brackets 20 are configured to be fixedly connected by bolts or screw, it is equally conceivable to connect them by other attachment means i.e. rivets, welds or a mechanical locking connection. Preferably the support arms 10 and the brackets 20 are connected at at least two points 12a, 12b and 22a, 22b respectively. The brackets 20 are configured to be fixedly mounted on a road vehicle via the connecting mounting surfaces 22a, 22b, 22c. The mounting surface 22c is arranged at an angle in relation to the mounting surfaces 22a, 22b. Preferably the angle is 90±10 degrees. It is to be understood that the angle may vary from 0 to 180 degrees in different embodiments. Preferably the brackets are configured to be fixedly mounted to a lower side of a chassis of the road vehicle.

The second end 16b of the support arm 10 is connected to the foot plate 30. The foot plate comprises a frame 31 and a foot step 33 wherein the foot step 33 is connected to the frame 31. The footstep 33 has a major surface 34, extending in a major plane, in this case substantially parallel to the longitudinal axis of the support arms 10. The foot plate 30 may be made of any suitable material i.e. metals, polymeric materials, wood based materials or any combination thereof. The foot plate is constructed so that liquid can easily be removed or even go through the foot plate i.e. having a structure where there are one or more holes 32 or channels in the foot plate. Further the foot plate may be configured to have a non-slip area on the major surface 34 thereof. The non-slip area may be part of or arranged adjacent the holes 32 such that the structure of the holes 32 or channels in the foot plate also provides a non-slip function. The second end 16b of the support arms 10 are rotatably connected to the foot plate 30 such that the foot plate 30 may pivot around each of the support arms 10. The support arms 10 is configured to be rotatably connected to the foot plate 30 via a hinge member 14. The hinge member 14 has an extension transverse to the longitudinal axis of the support arm 10 as is shown in Fig 1a and Fig 1b.

The two support arms 10 are arranged in parallel. The two support arms are mirrored such that a bend in the first support arm 10 is bending in the opposite direction of the bend of the second support arm 10. The first and second support arms 10 are connected to the foot plate 30 at their respective second ends. Preferably the two support arms 10 are connected at a equidistance from the middle of the foot plate such that the step arrangement has a symmetry line at the middle of the foot plate 30. The deformation plane of each one of the two support arms 10 are parallel such that both support arms 10 are configured to deform at least partly in the same plane.

The support arms 10 have a cross section providing a bending resistance in the deformation plane which is lower than a bending resistance normal to the deformation plane. The cross section is a rectangular form having a height larger than a width. The cross section may be oval. The cross section may have a polygonal shape. Here, each support arm 10 has a rectangular cross-section and is provided in the form of and functions like a leaf spring. Here, the support arm 10 will be stiffer along the height direction along the width direction. The ratio between the width and the height of the support arm 10 is at least 10:1, preferably 12:1, more preferred at least 16:1, and most preferred at least 20:1. As an example the width of the support arm 10 may be 4mm and the height will be more than 40mm, preferably more than 48mm, more preferably more than 64mm most preferably more than 80mm.

Each support arm 10 comprises a primary deformation zone DZ in an area between the first end 16a and the second end 16b such that the at least one support arm 10 is configured to controllably deform in a deformation plane coinciding with the longitudinal axis in response to a collision force acting on the foot plate 30. Here, each support arm 10 comprises a weakening in the form of a bend in the deformation zone DZ. The support arm 10 comprises a first section 18a comprising the first end 16a and a second section 18b comprising the second end 16b. The first section 18a is connected to the second section 18b by an intermediate section 18c comprising the primary deformation zone DZ. The first section 18a and the second section 18b are configured to pivot in relation to each around said deformation zone DZ during deformation.

The support arm 10 may comprise a secondary deformation zone adjacent the bracket. The secondary deformation zone 17 may be configured to controllably deform the support arm 10 adjacent the bracket to prevent the connection between the support arm 10 and the bracket 20 from being deformed during a collision.

As can be seen in Figs. 1a-b, the foot plate 30 is provided with four sensors 50. A sensor 50 is to be understood as any type of sensor known in the art for detecting objects in the surrounding of the vehicle 40, also known as a parking sensor. That is, a sensor 50 may for example be an optical sensor, and/or a ultrasonic sensor. Each sensor 50 is configured to be communicatively connected to a controller of the vehicle 40, such that information with regards to objects in the surrounding of the vehicle 40 may be relayed to a vehicle operator. Preferably, each sensor 50 is communicatively connected to a controller of the vehicle 40 in a wireless manner.

The bracket 20 may be further configured to be releasably connected to the road vehicle by a fastening means. That is, apart from being fixedly mounted to the road vehicle as described above, the bracket 20 may be further releasably connected to the road vehicle by the fastening means at another point thereof. The fastening means may be configured to disconnected from the road vehicle 40 when the foot plate 30 is acted upon by a collision force above a predetermined threshold value. Hereby, the fastening means may improve upon the resilience of the step arrangement 1 in the deformation plane unless the foot plate 30 is acted upon by a collision force above a predetermined threshold value. In other words, the stiffness of the step arrangement 1 will be improved in the deformation plane, i.e. preferably in a horizontal plane substantially parallel with the ground, for collision forces below the predetermined threshold value. For example, the fastening means may be configured to disconnect from the road vehicle 40 when the foot plate 30 is acted upon by a collision force corresponding to an impact velocity of 5 km/h, or 10 km/h. Consequently, the step arrangement 1 may be stiffer for low impact velocities than for high impact velocities.

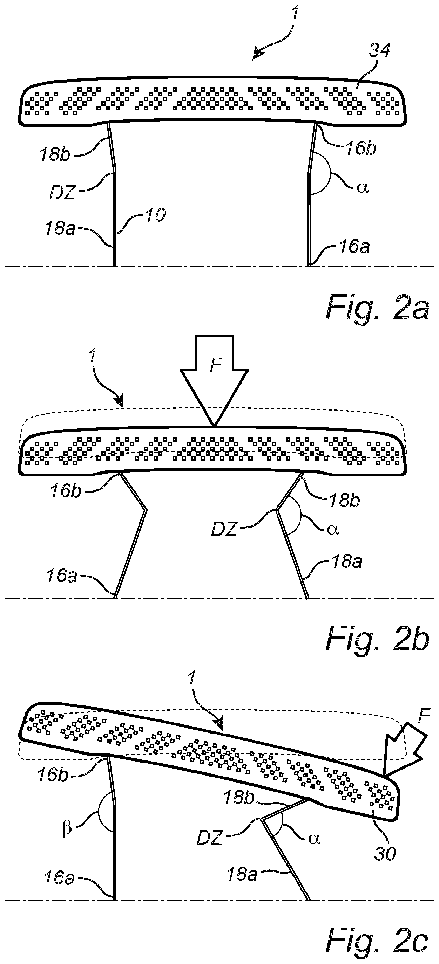

With reference to Fig 2a, 2b, 2c the foot plate 30 and two supports arms can be seen, the support arms 10 are connected to a road vehicle at the second end 16b via the brackets (not shown) at the opposite end of the foot plate 30. The primary deformation zone DZ includes at least the part of the support arm 10 where the angle α and/or β is located. The deformation plane is as seen from a top view extending in the plane of the drawings.

With reference to Fig. 2a part of the step arrangement at an initial position is shown. The support arms 10 are rotatably connected to foot plate 30 such that the foot plate 30 may pivot in the plane of the drawings in relation to the support arms 10. In Fig 2b and Fig 2c the angle between the support arms and the foot plate 30 changes when the collision force acts on the foot plate 30. By being rotatably connected the connection between the second end 16b of the support arm 10 and the foot plate 30 may persists and be essentially undamaged since the foot plate 30 pivots and thus transferring the collision force F to the support arms 10, more specifically towards the deformation zone of the support arm 10.

As can be seen in Fig 2b a deformation of the support arms 10 is occurring at the deformation zone when a collision force F is acting on the foot plate 30. The collision force F is acting at an angle on the foot plate 30 such that the deformation of the support arms 10 is equal in both of the support arms. The support arms 10 are deformed while the rotatably connected foot plate 30 is moved from an initial position, marked by the dotted lines, towards the first end 16a of the support arms. The deformation is mainly occurring in and/or parallel the deformation plane. In this case the support arms are mirrored and the force is acting on the middle of the foot plate 30 and thus the magnitude of deformation of the first support arm 10 will be equal the magnitude of deformation of the second support arm 10 but in opposite directions. In fact the two support arms 10 are configured to deform such that the deformations zoned DZ are moved towards each other. By both of the support arms 10 comprising a bend in their respective deformation zone, bending towards each other, the respective deformation of the two support arms 10 is configured to move such that their respective deformation zones DZ is moved toward each other.

The support arm 10 is configured to have a primary elastic mode of deformation such that when a collision force F acts on the foot plate 30, the support arm 10 will deform, and when the collision force F is no longer acting on the foot plate 30, the support arm 10 will spring back. Thus, it is to be understood that the angle α is bigger before and after collision than during collision. Further, the angle α is preferably the same before and after a collision. However, the support arm may also be configured for plastic deformation, i.e. even if the primary mode of deformation is elastic, the deformation will have a plastic component, that is, a component of plastic strain. Thus, the angle may alternatively be less than 5 degrees smaller than the initial angle after a collision, alternatively less than 10 or even less than 15 degrees smaller than the initial angle after collision. In other words the foot plate 30 may be moved closer towards the first end 16a of the support arms 10 during collision. When the collision force F is no longer acting on the foot plate 30 the foot plate 30 is moved farther away from the first end 16a towards the initial position of the foot plate 30. The maximum plastic strain during a collision in the support arm 10 may for example be less than 10%, less than 8%, or less than 6%.

With reference to Fig 2c a deformation of the support arms 10 is occurring at the deformation zone when a collision force F is acting on the foot plate 30. The collision force F is acting at an angle on the foot plate 30 such that the deformation of the two support arms 10 are different from each other. The support arms 10 are deformed while the rotatably connected foot plate 30 is moved from a initial position, marked by the dotted lines, towards the first end 16a of the support arms. In this case it is mainly the side of the foot plate 30 that is acted on by the collision force F that is being moved towards the first end 16a of the support arm 10. By the connection between the support arms 10 and the foot plate 30 being rotatable, one of the support arms are allowed to deform more than the other without damaging the connection to the foot plate 30. By the deformation in the support arms 10 being elastic the support arms 10 will after deformation return towards their initial state as seen in Fig 2a and the foot plate 30 will return towards its initial state marked by the dotted lines. The deformation is mainly occurring in and/or parallel the deformation plane.

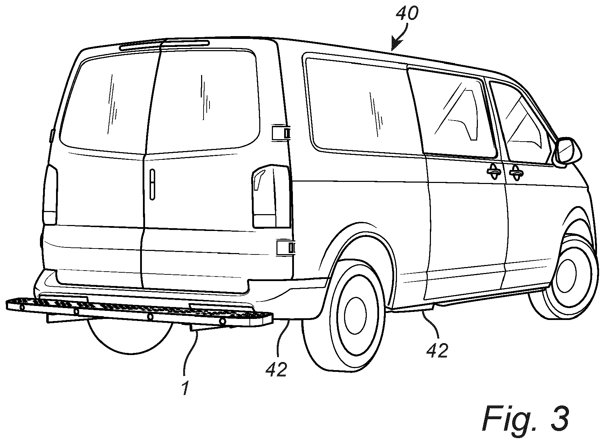

With reference to Fig. 3 a road vehicle 40 with a step arrangement mounted on a lower rear side thereof is shown. The step arrangement 1 is via the brackets mounted to a lower side of the chassis 42 of the road vehicle 40. The step arrangement is mounted in such a way that the step arrangement is positioned such that the foot plate is placed behind the road vehicle 40. The support arms has a length that is long enough to be mounted, via the brackets, to the underside of the road vehicle 40 and at the same time provided be connected to the foot plate, behind the road vehicle. Preferably the length of the support arms 10 are such that there is enough space between the foot plate and the road vehicle for the support arms 10 to deform without the foot plate hitting the road vehicle 40 during a collision where the collision force is weak enough for the support arms to not collapse and great enough to enforce a deformation on the support arms, which is usually the case when being collided into while parked or when going in reverse. Hereby the step arrangement 1 is accessible to an operator. The doors to the luggage compartment are accessible as well. Further when driving in reverse, the step arrangement 1 is in most cases the first structure of the vehicle that will hit an obstacle. It is also conceivable that the step arrangement could be mounted on the side of thar road vehicle. Further the step arrangement could be mounted to a side door of the step arrangement such that the step arrangement moves together with a door when the door is opened and closed.

As previously stated all properties of one support arm may apply to both of the support arms shown in the drawings. It is also conceivable to have more support arms with the same properties. The support arms may be mirrored or even copies. It is equally feasible to have different properties of the support arms if two or more support arms are present.

## Claims

1. A step arrangement (1) for a road vehicle (40), the step arrangement (1) comprising:
a foot plate (30);
at least one bracket (20) configured to be mounted to the road vehicle (40);
at least one support arm (10) having a longitudinal axis extending between a first end (16a) fixedly connected to the at least one bracket (20) and a second end (16b) connected to the foot plate (30); wherein
the at least one support arm (10) comprises a primary deformation zone (DZ) in an area between the first end (16a) and the second end (16b) such that the at least one support arm (10) is configured to controllably deform in a deformation plane coinciding with the longitudinal axis in response to a collision force (F) acting on the foot plate.

2. The step arrangement (1) according to claim 1, wherein a primary mode of deformation of the at least one support arm (10) is elastic deformation.

3. The step arrangement (1) according to claim 1 or 2, wherein the primary deformation zone (DZ) comprises a weakening (11), such as a bend or a kink.

4. The step arrangement (1) according to any one of the preceding claims, wherein the at least one support arm (10) comprises a first section (18a) comprising said first end (16a) and a second section (18b) comprising said second end (16b), wherein the first section (18a) is connected to the second section (18b) by an intermediate section (18c) comprising the deformation zone (DZ), wherein the first section (18a) and the second section (18b) are configured to pivot in relation to each around said deformation zone (DZ) during deformation.

5. The step arrangement (1) according to claim 4, wherein the first section (18a) and the second section (18b) are arranged at an angle in relation to each other in the deformation plane.

6. The step arrangement (1) according to any one of the preceding claims, wherein the at least one support arm (10) has a cross section providing a bending resistance in the deformation plane which is lower than a bending resistance normal to the deformation plane.

7. The step arrangement (1) according to claim 6, wherein a ratio between a height and width of the at least one support arm (10) is at least 10:1, preferably 12:1, more preferred at least 16:1, and most preferred at least 20:1.

8. The step arrangement (10) according to any one of the preceding claims, wherein the second end (16b) of the at least one support arm (10) is rotatably connected to the foot plate (30).

9. The step arrangement (1) according to claim 8, wherein the second end (16b) of the at least one support arm (10) is rotatably connected to the foot plate (30) via a hinge member (14) having a rotational axis having an extension transverse to the longitudinal axis of the at least one support arm (10).

10. The step arrangement (10) according to any one of the preceding claims, wherein the bracket (20) is configured to be fixedly mounted to a lower side of a chassis (42) of the road vehicle (40).

11. The step arrangement (1) according to any one of the preceding claims, wherein two support arms (10) are arranged substantially in parallel such that the respective deformation planes of the two support arms (10) are substantially parallel, and wherein the foot plate (30) extends between the respective second end (16b) portions of the two support arms (10).

12. The step arrangement (1) according to claim 11, wherein the two support arms (10) are each configured to deform in the respective deformation plane such that the respective deformation zones (DZ) are moved towards each other.

13. The step arrangement (1) according to any one of the preceding claims, wherein the at least one bracket (20) is further configured to be releasably connected to the road vehicle (40) by a fastening means, said fastening means being configured to disconnected from the road vehicle (40) when the foot plate is acted upon by a collision force (F) above a predetermined threshold value.

14. The step arrangement (1) according to any one of the preceding claims, wherein the bracket (20) comprises a first (22a, 22b) and a second (22c) mounting surface configured for fixedly mounting the bracket (20) to the chassis of the road vehicle, wherein the first and second mounting surface each having a respective plane of extension, wherein the planes of extension are arranged at an angle in relation to each other.

15. A road vehicle (40) comprising a step arrangement (1) according to any one of claims 1-14.
